# EUROPEAN PATENT APPLICATION

(11) **EP 3 000 746 A1**
(43) Date of publication of application: **30.03.2016**
(21) Application number: 15275205.1
(22) Date of filing: 23.09.2015
(51) Int. Cl.: B65D 75/00, A01N 1/02, A01K 97/04, B65D 81/26, B65D 85/50, B65D 33/14, B65D 33/16

(54) **CONTAINER AND METHOD OF USE THEREOF**

(30) Priority: 23.09.2014 GB 201416797
(71) Applicant: Willy Worns Ltd, Selby, Yorkshire YO8 8HN (GB)
(72) Inventor: Holgreaves, Chris, Selby, Yorkshire YO8 8HN (GB)
(74) Representative: Corbyn, David Jonathan

(57) **Abstract**

A container (2) for the storage of live bait and in particular maggots for fishing. The container (2) is at least partially defined by two or more walls (4,6) and includes one or more perforations or air holes (16) formed in at least one of the walls and furthermore at least one of the walls is formed from substantially flexible material.

## Description

The invention to which this application relates is an apparatus for containing live bait and particularly, although not necessarily exclusively, live bait for fishing.

Although the following description refers exclusively to containing or storing live bait that is in the form of maggots or larvae, the skilled person will appreciate that the present invention could be used to contain other animals such as worms, insects and/or the like.

The use of maggots as bait to attract fish in the sport of fishing is well known. Conventionally, fishermen will buy a pint or half pint of maggots from a fishing supplies provider and store the same in rigid plastic 'Tupperware™' type container including air-holes. When not in use, the containers are usually stored in a refrigerator to prevent the maggots becoming unviable by dying or turning into pupae (casters). Maggots stored in a refrigerator manner are usually viable, in that they are alive, usable as live bait and have not formed casters, for around a week. Maggots that are kept for longer than this are no longer viable for use as live bait.

More recently, live bait has become available for purchase on-line and is posted to the purchaser in containers substantially the same as that used for conventional storage. Problems can arise during postage as the conditions the maggots are subject to in transit cannot be controlled and therefore the maggots can have a relatively short period of viability.

It is therefore an aim of the present invention to provide a container that addresses the abovementioned problems.

It is a further aim of the present invention to provide a method of storing and/or packaging maggots and live bait that addresses the abovementioned problems.

It is a yet further aim of the present invention to provide a retail pack for live bait that addresses the abovementioned problems.

In a first aspect of the invention there is provided a container at least partially defined by two or more walls, said container including one or more perforations or air holes formed in at least one of the walls and wherein at least one of the walls is formed from substantially flexible material.

Preferably the walls defining the container comprise substantially flexible material. Typically all the walls of the container are formed by substantially flexible plastics material. Further typically the walls of the container define a substantially flexible pouch, bag or pocket.

Further preferably at least one of the walls defining the container is substantially transparent and/or includes one or more substantially transparent portions.

In one embodiment the walls define a container that is tapered or substantially wedge shaped. Typically the container is defined by at least three walls.

In one embodiment at least one wall forms a base of the container wherein side walls depend from the same. Typically the base wall or at least part thereof is substantially transparent.

In one embodiment one or more of the side walls includes a transparent portion and/or is substantially transparent.

In one embodiment at least the side walls are connected to adjacent walls by a common edge. Typically the common edges of adjacent side walls are substantially parallel.

In one embodiment the container is movable from a substantially flat storage condition to a second filled or in-use condition. Typically the container includes one of more fold lines to allow the container to move between the storage and in use conditions. Further typically in the in-use configuration the container includes live bait such as maggots and/or the like.

In one embodiment the side walls of the container are substantially non-parallel. Typically the non-parallel walls converge to an apex at the top of the container.

In one embodiment at least part of the container is removable to form an opening into the same.

In one embodiment the container includes a line of weakening and/or a tear-strip along which the container can be opened and the contents accessed. Typically once the container is filled it is sealed by attaching or adhering at least two of the container walls together, thereby forming an internal chamber in which the container contents are stored. Further typically the container is sealed by heat sealing two or more substantially opposing walls.

In one embodiment the sealed container can be opened by removing at least a portion of a wall and/or portion of the container including the seal.

Preferably the container includes closure means. Typically the closure means allows the container to be sealed or resealed. Further typically the closure means can comprises hook and loop type fastenings, zippers, membrane sliders, clasps, adhesive tabs, and/or the like. Thus the container can be sealed or resealed and reopened after a portion of the container is removed and substantially opened. Further preferably the closure means are hook and loop fastenings substantially of plastics material.

In one embodiment the container includes a removable section to initially open the container and a closure means to reseal and reopen the container subsequently. Typically the container includes one or more notches to provide a point of weakening and/or indicate where the user can remove the section or strip.

In one embodiment the closure means allows the user to selectively open and close the container.

Typically once opened the apparatus forms a resealable bait tub. Further typically the opening is of sufficient dimensions for a user to fit their hand in to remove the bait.

In one embodiment the base of the container is larger than the top of the same. Typically the area of the base of the container is at least equal to the area of the opening. Further typically the container is adapted to be stable enough to sit when full and open without falling over.

In one embodiment the base is substantially almond or mandorla or vesica piscis shaped. Typically the two walls extending from the same are sealed together at the extremities or edges thereof. Further typically the top edges of the walls are sealed together thereby forming a wedge shaped container or package.

In one embodiment the container includes ammonia absorbent and/or adsorbent material.

In one embodiment the perforations or air holes are formed substantially towards the top of the container. Typically the perforations or air holes are formed in at least part of the side walls of the container. Further typically the perforations or air holes are formed in a strip and/or substantially linear band.

In one embodiment the container includes a hanging means. Typically the hanging means is a aperture and/or hook that enables the container to be hung from a rail in use.

In a second aspect of the invention there is provided a method of storing maggots in a container, said container at least partially defined by two or more walls, said container including one or more perforations or air holes formed in at least one of the walls and wherein at least one of the walls is formed from substantially flexible material, said method including the steps of:
- introducing one or more maggots to the container; and
- sealing the container.

Typically the container is filled to a level to prevent the bait from escaping or crawling out.

Preferably the container is refrigerated. Typically once the container is filled with one or more maggots it is stored in a refrigerator and/or a cooled environment.

Typically the container is heat sealed.

In one embodiment the perforations or air holes are formed using a 1mm needle. Typically the holes are formed using a hot needle.

In a third aspect of the invention there is provided a retail pack or pouch suitable for the display and/or storage of live bait, said pack including a pack at least partially defined by two or more walls, said pack including one or more perforations or air holes formed in at least one of the walls and wherein at least one of the walls is formed from substantially flexible material.

Thus the present invention provides a container suitable for storing and/or transporting live bait

Specific embodiments of the invention are now described with reference to the following figures, wherein:
Figure 1 shows a perspective view of one embodiment of the invention;
Figure 2 shows a top down or plan view of one embodiment of the invention;
Figure 3 shows a front view of one embodiment of the invention;
Figure 4 shows a rear perspective view of on embodiment of the invention; and
Figure 5 shows a front view of a further pack in accordance with one embodiment of the invention.

The present invention provides a flexible, resealable, reusable and breathable pack for the storage and transport of live bait and in particular maggots. In particular maggots contained within these types of packs last for 3-4 months.

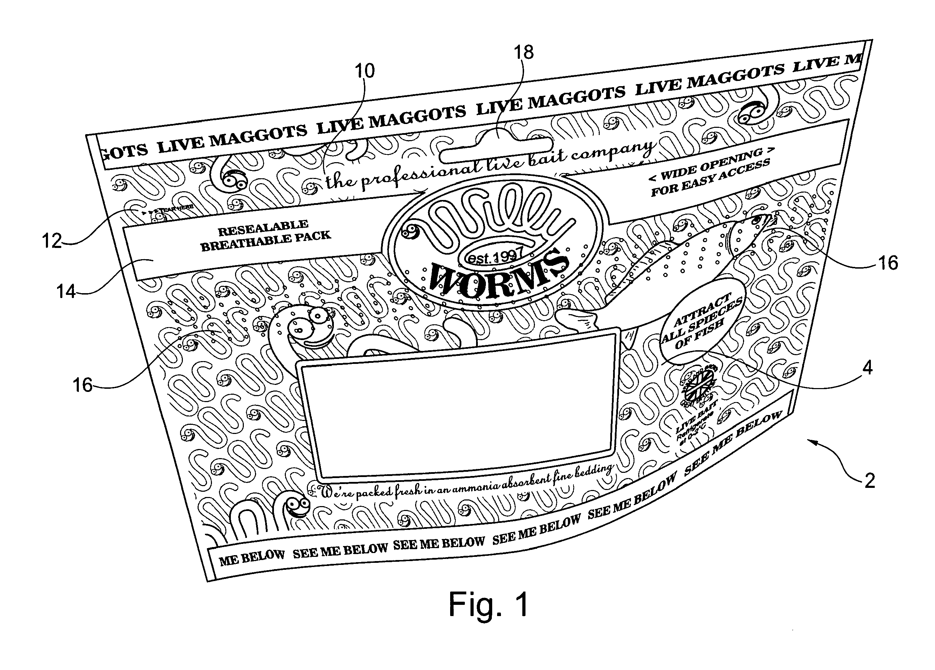

Turning to figure 1 where there is shown a pouch 2 constructed from flexible plastics material. The pouch is designed for use as a retail pack and comprises a pair of opposed walls 4, 6 and a base or gusset wall 8. The pack is filled with maggots, usually accompanied with bedding that can include or be formed of an ammonia absorbent material.

The pack is provided sealed, in this example heat sealing across a horizontal strip 10. The heat sealed strip can be removed and the contents accessed by tearing along a horizontal line 12 located below the heat sealed strip.

The pack can be resealed using the sealing or fastening member 14, that includes hook and loop type fastenings that also run substantially horizontally across the top of the pack so that the contents can be selectively accessed and closed after the seal 10 has been removed and the pouch opened for the first time.

The pouch 2 also includes a number of air holes, 16 formed across the top of the pouch but below the sealing member 14. Also included is an aperture or hole 18 so the pouch can be hung on a rail for storage and/or display.

In this example the pouch is rectangular in shape with an elliptical base that tapers to a substantially flat top, resulting in a wedge shaped pouch. This enables the pouch to be stood independently, without any support when in use. After use, or when the pouch is empty, it can be folded flat for storage and/or re-use.

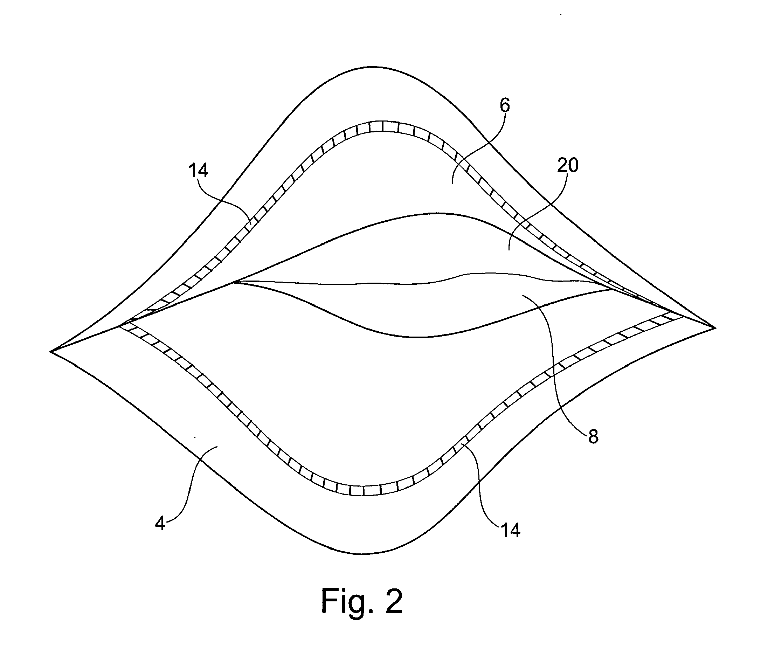

Figure 2 is a top down view of an empty pouch with no contents where the transparent base 8 or gusset walls 20 are visible. The plastic hook and loop fastening/sealing members 14 are also visible.

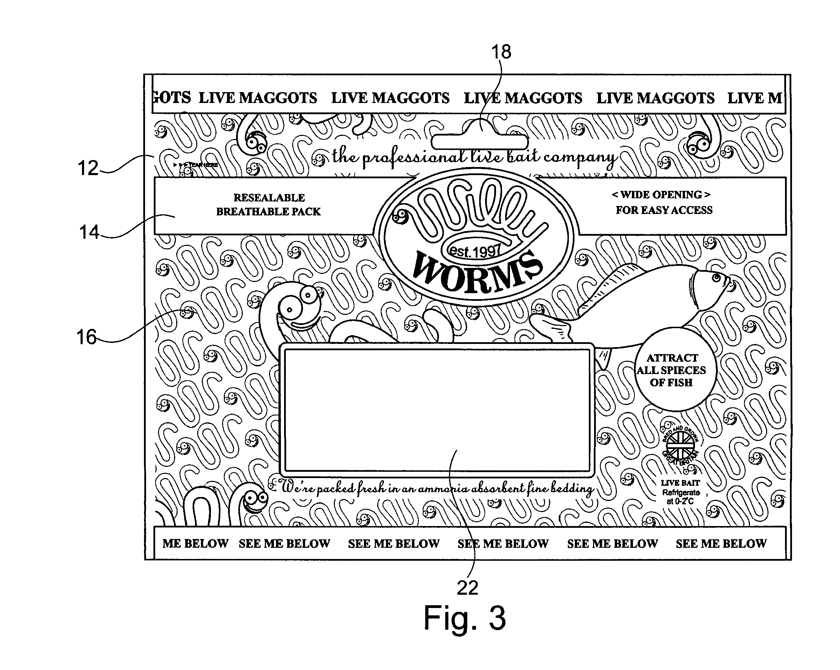

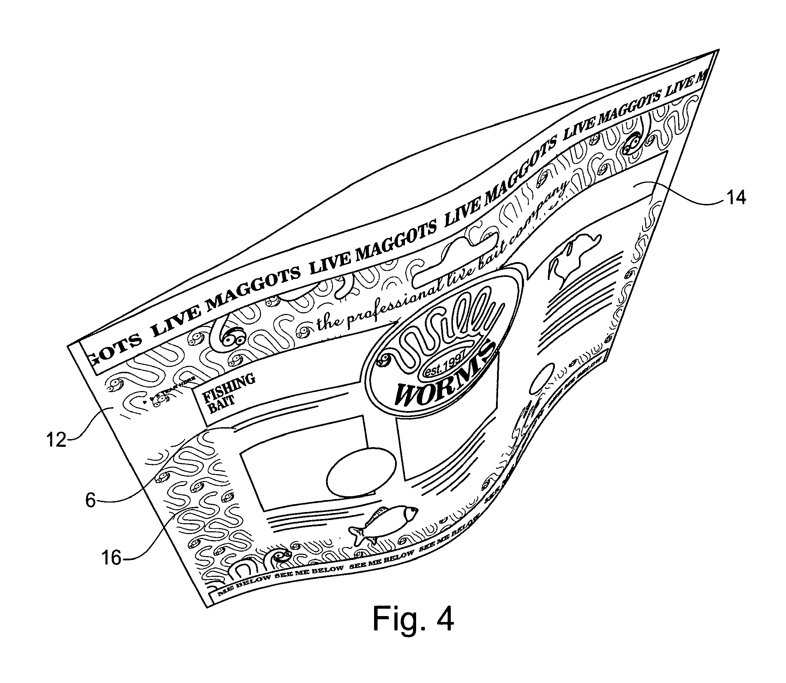

Turning to figure 3 which shows a front view of the pouch, there can be seen that the front wall 4 contains a blank rectangle 22 for further information. This can include an address label if the pouch is to be dispatched by post and/or further information regarding the contents. In one example a barcoded label is added, typically with image of content of maggots or worms for shops to use/scan their (POS) point of sale system for ease of stock take and pricing. The rear wall 6 of the pouch, as shown in figure 4, includes further information on the use and suggested storage of the contents and also includes a strip of air holes 16.

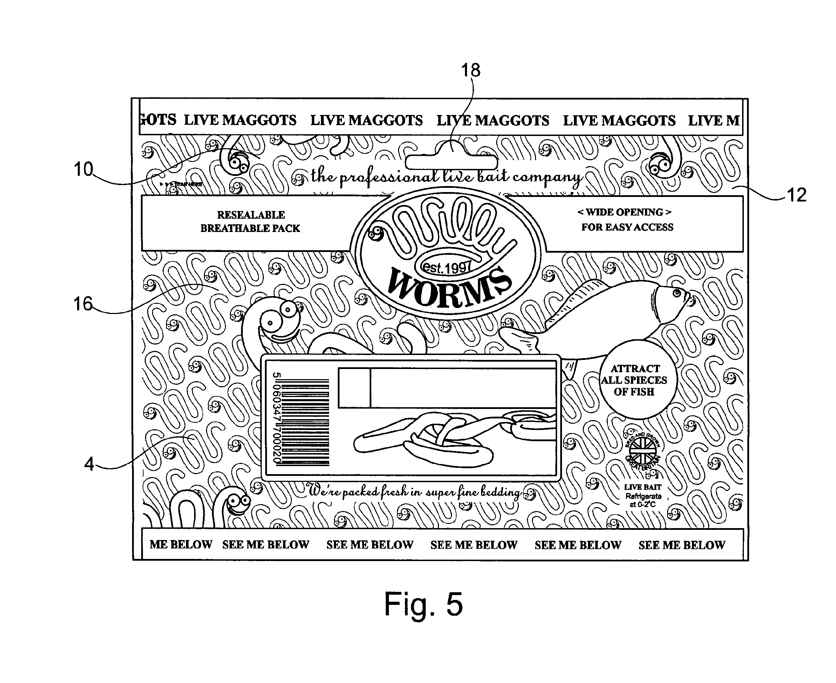

Figure 5 shows a similar pack, in that it includes flexible walls and gusset, horizontal strip or seal 10, fastening or sealing member 14, air holes 16 and a rail hole 18. On the front wall 4, a label 24 has been applied to the blank rectangle 22 to indicate the contents (in this example dendrobaena worms) and also to provide a barcode so that the pack can be scanned through a point of sale terminal in a shop and/or the like.

In particular, the present invention is suitable for containing live bait such that the same can be sold in conventional shops and supermarkets.

## Claims

1. A container at least partially defined by two or more walls, said container including one or more perforations or air holes formed in at least one of the walls and wherein at least one of the walls is formed from substantially flexible material.

2. A container according to claim 1 wherein all the walls defining the container comprise substantially flexible plastics material.

3. A container according to claim 2 wherein the walls of the container define a substantially flexible pouch, bag or pocket.

4. A container according to claim 3 wherein at least one of the walls defining the container is substantially transparent and/or includes one or more substantially transparent portions.

5. A container according to any preceding claim wherein the walls define a container that is tapered or substantially wedge shaped.

6. A container according to claim 5 wherein at least one wall forms a base of the container wherein side walls depend from the same and the base wall or at least part thereof is substantially transparent.

7. A container according to any preceding claim wherein the container is movable from a substantially flat storage condition to a second filled or in-use condition.

8. A container according to claim 7 wherein at least part of the container is removable to form or expose an opening into the same.

9. A container according to any preceding claim wherein the container includes closure means allowing the user to selectively open and close the container.

10. A container according to claim 1 wherein the container includes ammonia absorbent and/or adsorbent material.

11. A container according to claim 1 wherein the perforations or air holes are formed substantially towards the top of the container in a strip and/or substantially linear band.

12. A container according to claim 1 wherein the container includes a hanging means.

13. A method of storing maggots in a container, said container at least partially defined by two or more walls, said container including one or more perforations or air holes formed in at least one of the walls and wherein at least one of the walls is formed from substantially flexible material, said method including the steps of:
- introducing one or more maggots to the container; and
- sealing the container.
